# EUROPEAN PATENT APPLICATION

(11) **EP 1 076 459 A2**
(43) Date of publication of application: **14.02.2001**
(21) Application number: 00117007.5
(22) Date of filing: 08.08.2000
(51) Int. Cl.: H04N 7/24

(54) **Data transfer system and method**

(30) Priority: 09.08.1999 GB 9918584
(71) Applicant: MOTOROLA, INC., Schaumburg, IL 60196 (US)
(72) Inventor: Buttar, Alistair, Tannay 1295 (CH); Soudagar, Salma, 1296 Coppet (CH); Duc, Benoit, 1024 (CH)
(74) Representative: Gibson, Sarah Jane

(57) **Abstract**

A data transfer system for transferring data having an adjustable multi-resolution transmission format has a data source and a user terminal which are connected via a network. The user terminal transmits a configuration signal to the data source which indicates parameters of the system. The data source uses the received configuration signal to adjust the multi-resolution transmission format in dependence upon the received parameters. The data is then transferred from the data source to the user terminal using the adjusted transmission format.

## Description

### Field of the Invention

This invention relates to a data transfer system and method for multi-resolution image transfer, and particularly but not exclusively to such transfer in two-way data communication systems.

### Background of the Invention

Recently a wide variety of multimedia applications have come into existence, which require the delivery of image data over different types of communication channels. This is mainly due to the extensive use of World Wide Web, which has become a pervasive mean for disseminating information, such as images, video, documents and audio information.

Image data may be transferred over a two-way data communication system, typically by a data source, which could be a server computer on a network or an image capture device such as a digital camera, to a two-way data communications device such as a two-way pager, cellular phone, cordless phone or portable computer. Images are encoded by the source and transmitted to the device, where they are decoded , viewed and possibly stored.

A problem associated with image transmission, especially in wireless applications, is the time taken to transmit the image from the source to the device, and the associated bandwidth required of the network or channel utilised for transmission. One solution to this problem is to provide a number of image formats for the same image, each format having a different data size and/or different terminal profiles, and allowing a user to select one of the formats to be transmitted in dependence upon how long they wish to wait for the image to be downloaded and displayed.

However, the above solution requires the source to either transcode a single image format (i.e. convert it to the selected format for transmission), or to store each of the formats which are to be available for download.

This invention seeks to provide a data transfer system and method which mitigate the above mentioned disadvantages.

### Summary of the Invention

According to a first aspect of the present invention there is provided a data transfer system [claim 1]

According to a second aspect of the present invention there is provided a data transfer method [claim 2]

In this way a data transfer system and method is provided in which the need for the data source to transcode or store multiple image formats for the same image is avoided, and network bandwidth is used optimally.

### Brief Description of the Drawings

An exemplary embodiment of the invention will now be described with reference to the drawing in which:
FIG. 1 shows a preferred embodiment of a data transfer system in accordance with the invention, in which signals are transmitted to a data source;
FIG. 2 shows the system of FIG. 1 in which data is transmitted from the data source; and,
FIG. 3 shows an illustrative flow chart of a method of operating the system of FIG.1.

### Detailed Description of a Preferred Embodiment

A standard for encoding and compression of images for data transfer across a network is JPEG (an ISO/IEC image compression standard developed by the Joint Photographic Experts Group). The JPEG standard is a block based Discrete Cosine Transform (DCT) standard, wherein spatial information is transmitted in a frame in several different ways, or formats.

The most common JPEG format is baseline mode, where the image data appears sequentially in blocks in raster scan order in the bit-stream.

Another JPEG format is the progressive mode. In this mode, image data appears not only sequentially in blocks in raster scan order, but also in scans of increasing frequency resolution and/or DCT coefficient accuracy. This mode allows data to be displayed by the device in low quality form first, and then a progressively higher quality image is formed over the low quality image as higher resolution information is received and decoded.

JPEG also supports a sequential loss-less mode of operation, which uses a predictive coding technique, not based on DCT. The processes used are spatial processes based on the coding model developed for DC coefficients of the DCT.

While the progressive model of JPEG provides a piece-wise approximation of "scalability", it does not provide the flexibility provided by multi-resolution transforms, such as wavelet transforms, which make possible continuously scalable and embedded bit-streams supporting lossy and loss-less compression. Such bit-streams may be decoded up to any arbitrary position in the bit-stream, and the image will be decoded as a full image, the quality of the image being dependent upon how much of the bit-stream has been decoded. This bit-stream could contain a compressed image, which has been coded in loss-less mode, and transmission can be truncated at any point in the bit-stream, the quality and spatial resolution being dependent upon the position of the truncation. If there is no truncation, the image will be transmitted without any loss of quality.

Such a multi-resolution coding scheme thereby facilitates a single image being encoded in a single format, and decoded up to any arbitrary position in the bit-stream, whereupon the image will be decoded as a full image, and the quality of the image will be dependent upon how much of the bit-stream has been decoded. The choice of this position can be made either before image transfer is initiated or dynamically during the transfer.

Furthermore, an object based coding technique will allow random access in the bitstream syntax, thus the user can decide on the quality of different parts of the image, at different quality or resolution. Indeed the image may be divided into objects, which may be annotated by additional data such as audio or text, making it a compound document.

Progressive or scalable transmission of image data is very useful for data communication since it can be adapted to request of the client, without any transcoding of the compressed bit-stream (i.e. converting to a different format for transmission). Loss-less coding of information is also very interesting in client server architectures since the data stored on the server could be coded in loss-less or quasi-loss-less mode to avoid any loss of information and quality. But since the transmission of the data could be done over narrow band channels, further compression of the image data will be necessary. The idea of progressive transmission from lossy to loss-less compression is a useful one when considering a two-way client-server communication system, where the client can choose the quality of transmitted image from lossy to loss-less depending on the amount of data it is prepared to receive.

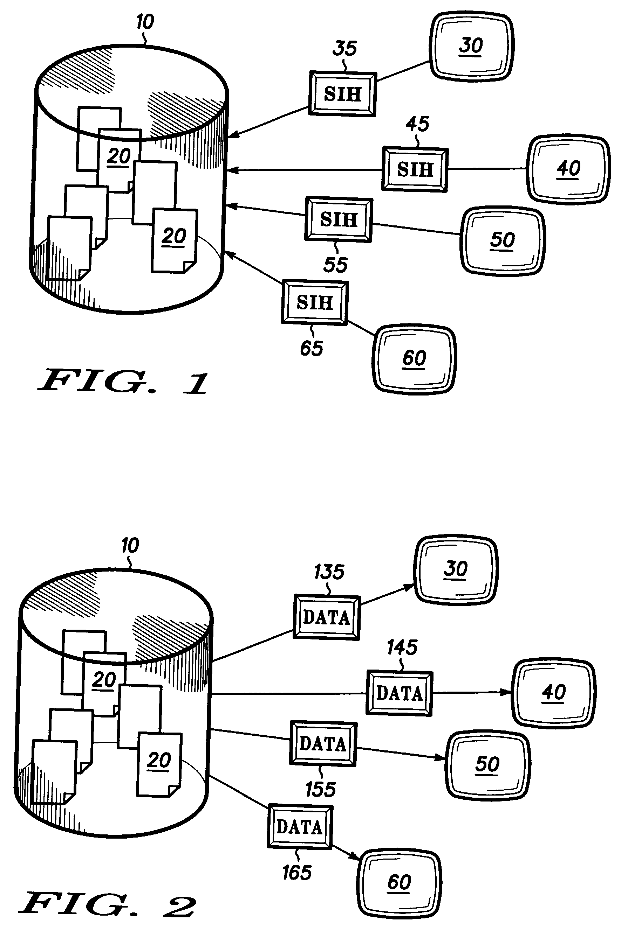

Referring to FIG. 1 there is shown a data transfer system including a data source 10 (which may be a computer network server, a digital camera, a cache, a gateway or a portable PC) containing a number of image data files 20, which are original images compressed in a loss-less manner as 1200x1000 8-bit colour JPEG images. A number of communications devices to be further described below are coupled to the data source 10 via a network (not shown but illustrated by arrows from the devices) which may be a computer wired network or a wireless (air interface) network or a combination of both. In either case the network has a finite bandwidth and a number of factors affecting the speed of data transfer using the network. The communications devices may be mobile phone, a personal computer, a laptop or palmtop computer, a two-way pager or similar.

A first device is a 2-way communications device 30, having a 320x260 colour display. A second device is a 2-way communications device 40, having an 800x600 colour display. A third device is a 2-way communications device 50, having a 640x220 colour display. A fourth device is a 2-way communications device 60 having a 160x240 monochrome display. The first, second, third and fourth devices 30, 40, 50 and 60 respectively are each coupled to the data source 10 via the network.

In the system of FIG. 1, a device initiates a communication session by sending a message known as a Session Initialisation Header (SIH) to the data source 10. Afterwards, the device can ask data source 10 to send one ore more images, as appropriate. The device 30 is arranged to send a SIH message 35 to the data source 10. Similarly the other devices 40, 50 and 60 are arranged to send SIH messages 45, 55 and 65 to the data source 10. Since the data source 10 has an encoding scheme for encoding data transmissions, and each of the devices 30, 40, 50 and 60 have similar schemes for decoding received data transmissions, the details of a particular device decoding scheme are embedded in the SIH to ensure interoperability between encoder and decoder. In some cases, a low cost communication device, with low memory size and processing power might only support the baseline decoding algorithm (that is the lowest level of compatibility between an encoder and a standard decoder), thus it would not support all tools needed for decoding different type of coded objects, contained in the bitstream. Once the data source 10 recognises the profile of the device, it can either send downloadable executable data to the device to ensure interoperability between the encoder and decoder, or transcode/encode the requested image with the same profile as the decoder, and transmit

An SIH may be sent not only at initialisation, but also in the middle of a communication session to redefine a parameter set, e.g. if the network properties have changed. Also, the parameters may not reflect the exact capabilities of the terminal device, but also the requirements or preferences of the human user. For example, the user of a portable phone with limited display capabilities may require the download of a high fidelity image, as he wants to visualise them later on his portable PC. If he wants to do so for one particular image, the user could send a new SIH right before requesting this image, and re-send the standard SIH corresponding to his terminal capabilities right after the transmission.

The Session Initialisation Header may contain a subset of the following information (as well as additional information, whenever needed):
Decoder profile info:
Display size:
Colour info:
Audio info:
Max Number of Character:
Level of Error Resilience requested for transmission:
Download for storage: (Boolean)
Download partially: (upper bound for size of transmitted data):
Metadata
Storage profile (size, persistence)

Referring now also to FIG. 2, there is shown the system of FIG. 1 after the SIH messages have been received by the data source 10. The data source 10, having processed the SIH messages from each of the devices, prepares and transmits image data as embedded bitstreams. For the device 30, a bitstream 135 having chrominance and luminance information, up to resolution 300x250 is transmitted. For the device 40, a bitstream 145 with chrominance and luminance information, up to resolution 600x500 is transmitted. For the device 50 a bitstream 155 with chrominance and luminance information , up to resolution 240x200 is transmitted. For the device 60 a bitstream 165 with only luminance information, up to resolution 240x200 is transmitted.

In this way the system provides for interactive multi-resolution image transmission in which the SIH is used as a messaging protocol between the devices and the data source to specify the decode and display capability of the device, and adapts the encoding or the available compressed bitstream syntax before transmitting. Thus only data which can be decoded and is useful to the decoder will be sent, thus saving bandwidth and transmission time.

The adaptation of the bitstream to the SIH specifications is facilitated in the case of modular bitstreams. In the case of modular bitstreams the ordering of the bitstream syntax is performed by detecting legal markers at boundaries of bitstream segments or by accessing the bitstream randomly, provided a "table of content" exists in the bitstream header. The adaptation of the syntax may be:
Inclusion of resynchronisation markers for error resilience
Reordering of the bitstream syntax for progressive transmission by accuracy
Reordering of the bitstream syntax for progressive-transmission by spatial resolution
Reordering of colour components

The SIH is received by the data source 10 from the device specifying whether to decode/display some type of data (image, text). Hence the data source 10 will only access the object types requested by the device. For example, if the device can only display text, the data source 10 will only send the text portion of a compound document. In some applications, the device would still want to receive the complete document and store it locally, this can also be communicated to the data source 10 so that the complete bitstream is sent to the device irrespective of the devices ability to fully utilise all of the data embedded in the bitstream.

Images may also contain embedded information such as audio data, which is compressed and contained in the bitstream. Some communication devices may decode the embedded information, or may not be able to play the information. The device should thus send the information to the data source 10 concerning its capability for decoding and displaying the embedded information contained in the bitstream. For example, if the device has no audio capability, the embedded audio information should not be sent from the data source 10.

Furthermore in such communication systems the transmission of compressed images over noisy or error prone channels becomes an important problem, which is relevant to a number of applications in use today. Errors may be occur in both wired and wireless environments. The problem of error resilience could be considered at source coding level and/or channel coding. Channel coding techniques takes care of the problem of error resilience, by performing error detection and correction, but some residual errors may still persist. Thus it is crucial that the decoder (device) detects and conceals these errors. Some additional error resilience techniques at the application level, such as data partitioning, error localisation and resynchronisation methods provide a compressed bitstream syntax which is robust to residual errors, with some additional overhead. These techniques are implemented in a hierarchical and scalable manner, which allow the encoder (data source 10) to set the level of error resilience of the bitstream based on the robustness of the channel, thus allowing a trade-off between compression efficiency and error resilience. The information on the robustness of the communication channel and network could be included in the SIH and can be sent from the device to the data source 10. If the conditions of the communication channel and network change dynamically, the current session can be momentarily suspended while a new SIH is set to the data source to modify the transfer characteristics dynamically.

In this way the system utilises a form of handshaking which exchanges messages between the device and the data source, to identify the decoding and display capability of the data source as well as the robustness of the communication channel. Thus the data source adapts the compressed bit-stream to the quality requested or imposed by the device so as to minimise the amount of useless data transmitted, thus minimising the time and hence cost of delivery.

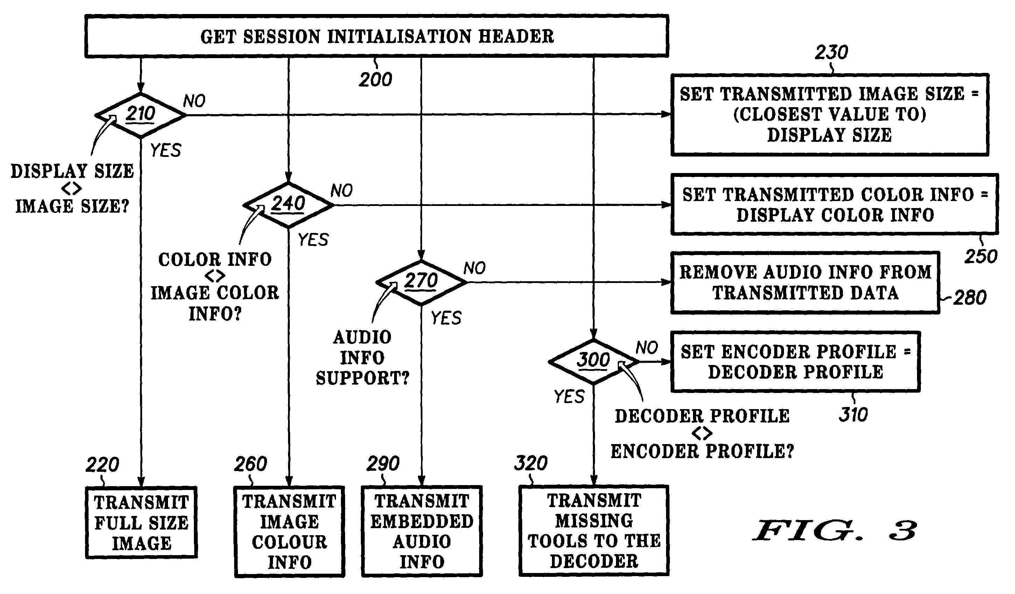

Referring now to FIG. 3, there is shown a flow diagram showing how the SIH may be used by the data source 10. At block 200, the SIH is received by the data source 10. Question block 210 decides whether the display size information obtained by virtue of the SIH is comparable to the full size of the image. If the answer is YES, then the full image is transmitted (block 220), but if the answer is NO, then the size of the actual image to be transmitted is adjusted to the closest readily achievable value to the device display size (block 230).

Question block 240 decides whether colour capability of the device obtained via the SIH is comparable to that of the image. If the answer is YES, then the colour information is transmitted (block 260), but if the answer is NO, then the amount of colour information to be transmitted is adjusted to reflect the colour capabilities of the device display (block 250).

At question block 270 information about the audio capabilities of the device is compared with the audio content (if any) embedded in the image. Again if the there is audio capability, then the embedded audio information will be transmitted (block 290). However if the device has no audio capability, then the embedded audio information will be removed from the transmitted data (block 280).

Finally, the decoder profile is compared to the encoder profile. If they match, or if they are similar, then the transmission will go ahead, possibly with any missing tools being sent to the decoder as part of the transmission (block 320). If the profiles don't match, then the encoder profile will be set to the decoder profile (block 310).

It will be appreciated that alternative embodiments to the one described above are possible. For example, the nature of the devices referred to above, and the image sizes may differ from that described. Also, the network arrangement may differ in that a gateway or other routing device could be used as part of the transfer arrangement. The SIH may be sent from a device to a gateway, which then interprets the SIH and makes an appropriate request of the data source.

Furthermore other similar information about the capabilities or settings of the device, other than those mentioned above, may be provided in the SIH and used by the data source 10.

Finally, it should be noted that error resilience settings were not illustrated in FIG. 3 for the sake of simplicity, however they would typically be used in practice. Also, in practice any type of annotation information may be provided, not only audio information.

## Claims

1. A data transfer system comprising:
a data source arranged to transmit data to a user terminal via a network, the data having an adjustable multi-resolution transfer format,
wherein the user terminal is arranged to transmit a configuration signal which indicates parameters of the system to the data source before the transmission of data, the data source being arranged to adjust the transmission format of the data upon transmission to the user terminal, in dependence upon the parameters of the received configuration signal.

2. A method of transferring data from a data source to a user terminal via a network, the data having an adjustable multi-resolution transfer format, the method comprising the steps of:
transmitting from the user terminal a configuration signal which indicates parameters of the system;
receiving at the data source the configuration signal;
adjusting at the data source the multi-resolution transmission format in dependence upon the parameters of the received configuration signal; and
transferring the data to the user terminal using the adjusted transmission format.

3. The data transfer system or method of claim 1 or claim 2, wherein the parameters of the system include the user terminal capabilities.

4. The data transfer system or method of any preceding claim, wherein the parameters of the system include user defined preferences.

5. The data transfer system or method of any preceding claim, where the parameters of the system include network characteristics.

6. The data transfer system or method of any preceding claim, wherein the data is ordered in a progressive-detailed manner, and the multi-resolution transmission format is adjusted by truncating the data transmission at a selected point.

7. The data transfer system or method of any one of claims 1 to 5, wherein the data is arranged as a modular bitstream, and the multi-resolution transmission format is adjusted by accessing selected portions of the data from the modular bitstream.

8. The data transfer system or method of claim 7, wherein each of the portions are progressive-detailed.

9. The data transfer system or method of any preceding claim, wherein the data is image data and the multi-resolution transfer format is an image transfer format.

10. The data transfer system or method of any preceding claim, wherein the data source is one of a computer network server, a digital camera, a cache, a gateway, and a portable PC.

11. A data transfer system substantially as hereinbefore described and with reference to the drawings.

12. A data transfer method substantially as hereinbefore described and with reference to the drawings.
